# FASCICULE DE BREVET EUROPEEN

(11) **EP 0 944 101 B1**
(45) Date de publication et mention de la délivrance du brevet: **01.09.2004**
(21) Numéro de dépôt: 99400600.5
(22) Date de dépôt: 11.03.1999
(51) Int. Cl.: H01F 27/04, H01B 17/30

(54) **Dispositif passe-barre et traversée électrique de paroi**
Stromschienen-Anordnung und elektrische Durchführung
Bus-bar device and electrical feed-through

(30) Priorité: 18.03.1998 FR 9803319
(43) Date de publication de la demande: 22.09.1999
(73) Titulaire: PIOCH S.A., 06515 Carros Cédex 1 (FR)
(72) Inventeur: Pioch, Olivier, 06200 Nice (FR)
(74) Mandataire: Blot, Philippe Robert Emile

(56) Documents cités:
- EP-A- 0 349 389
- EP-A- 0 678 879
- CH-A- 201 408
- FR-A- 2 545 641
- FR-A- 2 633 439
- US-A- 2 225 472

## Description

La présente invention concerne un dispositif passe-barre, destiné à être monté au travers d'un orifice ménagé dans une paroi pour le passage d'une barre conductrice, du type comportant un corps traversé de part en part par un conduit de réception de ladite barre et une couvercle rapporté sur ledit corps, ledit couvercle comportant, pour le passage de ladite barre, une lumière qui prolonge le conduit du corps.

Elle concerne en outre une traversée de paroi.

Les dispositifs passe-barre sont destinés à permettre le passage d'une ligne électrique, notamment de forte intensité, au travers d'une paroi, par exemple la paroi du boîtier d'un transformateur.

Les traversées de paroi sont ainsi réalisées à partir d'un dispositif passe-barre et d'une barre conductrice. Pour les barres de section oblongue et notamment sensiblement rectangulaire, les dispositifs passe-barre sont actuellement réalisées en matière plastique. Les traversées de paroi doivent être utilisées sous un capot ou dans une pièce à l'écart des intempéries extérieures, les matières utilisées, dans les structures connues, n'offrant pas une bonne résistance aux agressions extérieures. En particulier, les dispositifs passe-barre n'assurent pas une étanchéité suffisante.

Les traversées connues qui supportent une exposition aux intempéries extérieures comportent des dispositifs passe-barre, appelés dans ce cas passe-tige, réalisés en porcelaine. Ces dispositifs passe-tige, du fait de leur mode de fabrication, ne permettent que le passage d'une tige conductrice de section circulaire. De plus, ils sont coûteux. Enfin, ils sont fragiles et ne supportent pas des flexions trop importantes de la tige conductrice.

Le document FR 2.545.641 décrit un dispositif passe-barre selon le préambule de la revendication 1. Le document CH 201 408 décrit un dispositif passe-tige d'un autre type.

L'invention a pour but de proposer un dispositif passe-barre, de faible coût, pouvant être exposé aux intempéries extérieures, et permettant de recevoir une barre de section oblongue, notamment rectangulaire.

A cet effet, l'invention a pour objet un dispositif passe-barre selon la revendication 1.

Suivant des modes particuliers de réatisation, le dispositif passe-barre comporte l'une ou plusieurs des caractéristiques des revendications dépendantes.

L'invention a en outre pour objet une traversée de paroi, caractérisée en ce qu'elle comporte une barre conductrice et un dispositif passe-barre tels que définis ci-dessus.

L'invention sera mieux comprise à la lecture de la description qui va suivre donnée uniquement à titre d'exemple et faite en se référant aux dessins sur lesquels :
- La figure 1 est une vue en coupe de trois-quarts d'une traversée de paroi selon l'invention et
- La figure 2 est une vue en perspective, partiellement en coupe, du dispositif passe-barre de la traversée de la figure 1.

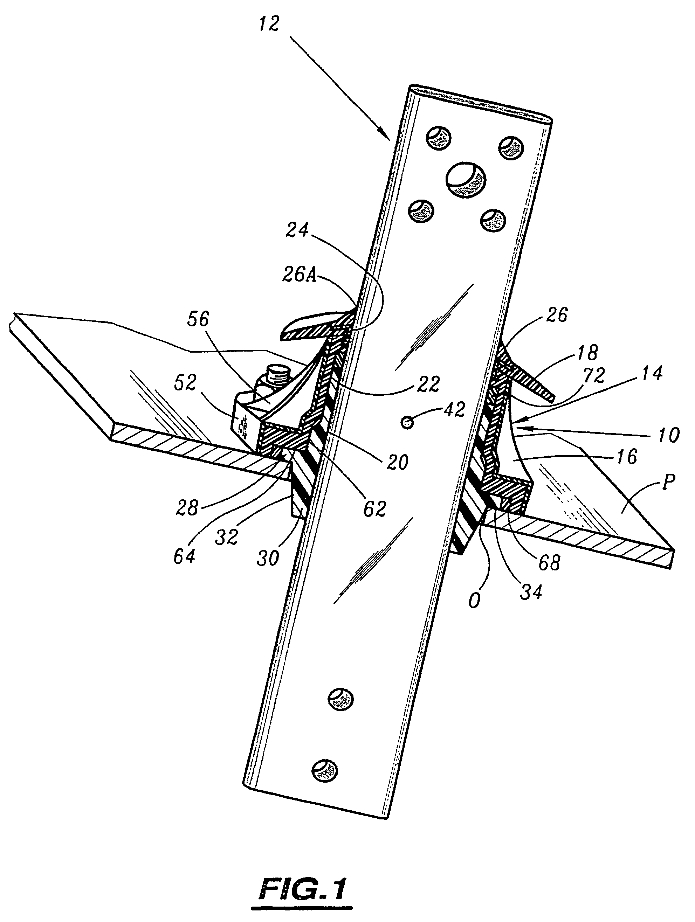

La traversée représentée sur la figure 1 comporte un dispositif passe-barre 10 et une barre conductrice 12. Le dispositif passe-barre 10 comporte un corps 14 et un couvercle 16 muni, au sommet, d'une collerette externe 18.

En variante, le couvercle 16 peut comporter au sommet plusieurs collerettes empilées suivant une partie de la longueur de la barre conductrice 12.

Le corps 14 et le couvercle 16 ont des formes sensiblement axisymétriques par rapport à la direction longitudinale de la barre 12. Ils sont réalisés essentiellement en une matière thermoplastique, par exemple du polyamide, du polybutylène téréphtalate ou du " peek ". La surface externe ou exposée du couvercle 16 est en outre recouverte totalement d'un revêtement protecteur et isolant 19.

La barre conductrice 12 est rectiligne et a une section oblongue, par exemple rectangulaire avec ses petits côtés arrondis. Elle est réalisée en métal non ferreux et comporte à chaque extrémité des perçages pour la connexion de câbles électriques.

Le corps 14 est traversé de part en part par un conduit 20 de réception de la barre conductrice12.

Le couvercle 16 présente une forme de cloche et délimite intérieurement un logement 22 de réception de l'essentiel du corps 14. Le logement 22 se prolonge à l'extrémité supérieure du couvercle 16 par une lumière 24 de passage de la barre conductrice 12. Cette lumière a une section sensiblement égale à la section de la barre 12.

La lumière 24 est bordée extérieurement par une lèvre périphérique 26 déformable élastiquement, adaptée pour s'appliquer de manière étanche sur le contour de la barre conductrice 12. La lèvre 26 est venue de matière avec le revêtement 19 couvrant le couvercle 16.

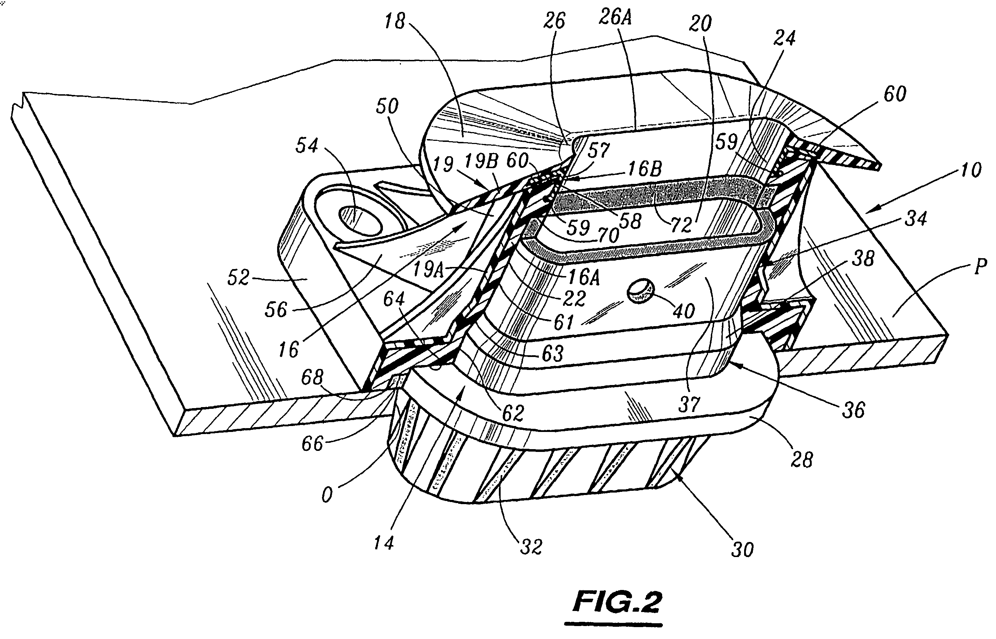

Le corps 14 et le couvercle 16 sont adaptés pour être disposés comme représenté sur les figures 1 et 2 d'un même côté d'une paroi P traversée d'un orifice O.

- A cet effet, le corps 14 présente essentiellement la forme d'un manchon dont le conduit interne 20 est de section constante. La section interne du conduit 20 est très légèrement supérieure à la section de la barre conductrice 12.

Le corps 14 comporte extérieurement dans sa partie médiane une collerette 28 d'appui sur la surface externe de la paroi P. Cette collerette sépare axialement le corps en une partie destinée à traverser la paroi P et une partie destinée à être reçue dans le couvercle 16.

Du côté de la collerette 28 destinée à traverser l'orifice O et à faire saillie à l'intérieur du logement délimité par la paroi P, le corps 14 comporte un collet 30. Celle-ci délimite le passage 20. Ce collet est rigidifié extérieurement par des nervures longitudinales 32 régulièrement réparties sur sa périphérie.

Les nervures 32 sont de hauteur progressivement décroissante depuis la collerette 28 jusqu'à l'extrémité libre du collet 30, afin d'assurer un guidage du corps 14 dans l'orifice O lors de son introduction. De plus, au voisinage immédiat de la collerette 28, la hauteur des nervures 32 est inférieure à la largeur de la collerette 28, de sorte qu'une surface d'appui périphérique 34 est ménagée entre les nervures 32 et le contour extérieur de la collerette 28.

De l'autre côté de la collerette 28, le corps 14 est défini par un prolongement tubulaire 34 de section oblongue délimitant le conduit 20. Dans sa région de liaison avec la collerette 28, le prolongement tubulaire 34 comporte extérieurement une surépaisseur périphérique 36. Cette dernière est reliée à la partie courante, notée 37, du prolongement 34 par un tronçon d'épaisseur progressivement décroissante 38 formant un chanfrein périphérique. Dans l'exemple décrit, ce tronçon 38 est sensiblement tronconique.

Un perçage radial 40 est ménagé sur une face plane du prolongement 34 dans sa partie courante 37 d'épaisseur réduite. Ce perçage 40 débouche à l'intérieur du conduit 20. Il est adapté pour recevoir l'extrémité d'une goupille, non représentée, destinée à la retenue axiale de la barre 12. L'autre extrémité de la goupille est reçue dans un perçage 42 transversal de la barre, aligné avec le perçage 40.

Le couvercle 16 est formé, afin de faciliter son moulage, de deux parties enclenchées élastiquement l'une dans l'autre. Ainsi, il comporte un tronc 16A coiffant le corps 14 et une bague annulaire rapportée 16B définissant la collerette 18.

Le tronc 16A comporte une paroi tubulaire 50 entourant le prolongement tubulaire 34. Cette paroi tubulaire 50 comporte, à son extrémité inférieure en contact avec la surface externe de la paroi P, une base de fixation 52. Elle porte, à son autre extrémité, la collerette 18.

La base 52 est de forme sensiblement rectangulaire avec des coins arrondis. Dans les coins sont ménagés des perçages 54 pour la réception de boulons de fixation.

Des nervures de renfort 56, de forme triangulaire, relient la surface exposée de la base 52 à la paroi tubulaire 50. Les nervures 56 prennent naissance à la base de la collerette 18. Elles ont une hauteur progressivement croissante jusqu'à la base 52.

Le tronc 16A est recouvert extérieurement sur toute sa surface exposée par une partie notée 19A du revêtement recouvrant l'ensemble du couvercle 16.

La collerette 18 a un contour extérieur oblong, sensiblement en forme d'ovale. Elle est légèrement inclinée vers la base 52 et s'étend sensiblement sur l'essentiel de la surface de celle-ci.

La collerette est formée par la bague annulaire 16B recouverte d'une partie notée 19B du revêtement 19.

La bague annulaire 16B comporte une jupe 57 délimitant partiellement la lumière 24 pour le passage de la tige 12. Cette jupe est reçue dans un lamage 58 ménagé à l'extrémité ouverte de la partie de la lumière 24 délimitée par le tronc 16A. La jupe 57 présente à son extrémité reçue dans le lamage 58 un bourrelet périphérique externe 59 adapté pour s'engager élastiquement dans une gorge annulaire complémentaire creusée dans le tronc 16A.

A son autre extrémité, la jupe 57 est bordée par une couronne externe 60 s'étendant radialement. Cette couronne 60 constitue une âme rigide pour la collerette 18, cette dernière étant formée pour le reste par le revêtement 19B.

La lèvre déformable 26 est constituée d'un bourrelet externe bordant la lumière 24. Ce bourrelet présente au sommet une arête vive 26A définissant une crête périphérique limitant la zone d'appui sur la barre conductrice 12. L'arête vive 26A se trouve dans le prolongement de la surface interne de la jupe 57 délimitant la lumière 24.

Le logement 22 du couvercle présente une section progressivement décroissante depuis la base 52 jusqu'à la lèvre déformable 26. Dans sa partie courante, le logement 22 comporte un tronçon principal 61 dont la section est très légèrement supérieure à celle du prolongement tubulaire 34.

Au niveau de la base 52, le tronçon principal 61 est prolongé par un tronçon élargi 62 destiné à recevoir la surépaisseur 36 du corps. Le tronçon élargi 62 est relié au tronçon principal 61 par un tronçon de section progressivement décroissante 63 présentant un profil sensiblement tronconique convergeant vers le sommet du couvercle 16. Ce tronçon définit un chanfrein correspondant au chanfrein défini par le tronçon 38.

A son extrémité débouchante au travers de la base 52, le logement 22 présente deux lamages successifs 64, 66 destinés, pour le moins large, à recevoir la collerette 28 et, pour le plus large, à recevoir à la fois la collerette 28 et un joint d'étanchéité 68 disposé autour de celle-ci. Ce joint 68 est adapté pour venir en appui simultanément sur le couvercle 16, le corps 14 et la surface externe de la paroi P.

Le tronçon principal 58 a une longueur supérieure à la longueur du prolongement tubulaire 34. Il s'achève au niveau de la lumière 24 qui définit avec le tronçon 58 un épaulement 70.

Un joint d'étanchéité annulaire 72 est disposé entre l'épaulement 70 et l'extrémité avant du prolongement tubulaire 34. Ce joint 72 est adapté pour s'appliquer simultanément sur le corps 14, le couvercle 16 et la barre conductrice 12 lorsque celle-ci est maintenue dans le dispositif passe-barre, comme représenté sur la figure 1. En variante non représentée, le joint unique 72 est remplacé par plusieurs joints empilés.

Selon l'invention, la lèvre 26 est réalisée en un matériau déformable, par exemple un élastomère isolant tel que du " silicone ", du " néoprène " ou du "nitrile". En particulier, la lèvre 26 est venue de matière avec le revêtement 19B recouvrant la bague annulaire du couvercle. Ainsi, le couvercle 16 est formé par une structure rigide interne, réalisée par exemple en matière plastique rigide sur laquelle est surmoulée la lèvre 26, en bordure de la lumière 24. La lèvre 26 se prolonge ainsi sur la collerette 18 et sur l'ensemble de la surface externe du couvercle 16 par l'intermédiaire du revêtement isolant 19A.

Afin d'assurer le montage d'une telle traversée, la barre conductrice 12 est introduite au travers du passage 20. Elle y est immobilisée par mise en place d'une goupille non représentée introduite dans les perçages alignés 40 et 42. On introduit ensuite le corps 14 au travers de l'ouverture O. Le joint 68 est mis en place autour de la collerette 28 en contact avec la surface externe de la paroi P.

De même, le joint 72 est introduit à l'intérieur du logement 22 ménagé dans le couvercle 16. Plus précisément, le joint 72 est disposé temporairement dans le tronçon 62 de largeur légèrement supérieure au tronçon principal 61.

Le couvercle 16 est alors rapporté autour de la barre 12 et de la partie extérieure du corps 14. Lors de l'enfoncement du couvercle 16 sur le prolongement tubulaire 34, le joint annulaire 72 est progressivement enfoncé suivant la longueur du tronçon principal 61 jusqu'à l'épaulement 70. Lors de ce déplacement, la surface convergente 63 favorise l'introduction du joint 72 et en particulier sa compression radiale.

Lorsque la base 52 est en appui sur la surface externe de la paroi P, des boulons sont introduits au travers des perçages 54, immobilisant ainsi le couvercle16. Ce dernier plaque et retient le corps 14 contre la paroi P par l'intermédiaire du joint 72 comprimé. Avantageusement, les parties saillantes des boulons sont recouvertes de capuchons isolants.

On comprend que, lorsque le couvercle 16 recouvre la paroi tubulaire 34, la goupille introduite dans les perçages alignés 40 et 42 est maintenue prisonnière à l'intérieur du dispositif passe-tige, de sorte que la barre 12 est maintenue fixe axialement.

Un tel moyen de retenue de la barre 12 permet de remplacer les joints 68 et 72 par simple démontage du couvercle 16, sans qu'il soit nécessaire de procéder au retrait de la goupille de retenue axiale de la barre conductrice.

Par ailleurs, lors du montage du dispositif passe-tige, le joint annulaire 68 est initialement disposé autour de la collerette 28. Cette dernière maintient le joint 68 en position lors de la mise en place du couvercle 16. Ainsi, il n'est pas nécessaire de procéder à une mise en place initiale du joint 68 dans le lamage 64 du couvercle 16, ce qui nécessiterait la retenue de celui-ci par mise en oeuvre d'un adhésif.

La lèvre périphérique externe 26 étant réalisée en un matériau déformable, celle-ci s'applique directement sur la surface externe de la barre 12, garantissant ainsi la fiabilité de l'étanchéité de la traverse.

De plus, la lèvre 26 étant prolongée par le revêtement externe isolant, le couvercle présente une bonne tenue aux agressions climatiques. Le couvercle 16 peut ainsi être disposé à l'extérieur sans protection particulière supplémentaire.

La partie du corps 14 faisant saillie vers l'extérieur par rapport à la paroi P est entièrement coiffée par le couvercle 16. Le corps peut donc être dépourvu de revêtement de protection contre les intempéries.

Une traversée électrique telle que celle décrite ici permet le passage d'un courant d'intensité supérieure à 1000 A pour une basse tension de 380 V ou une moyenne tension de l'ordre de 20 000 V.

## Revendications

1. Dispositif passe-barre en matière plastique (10), destiné à être monté au travers d'un orifice (O) ménagé dans une paroi (P) pour le passage d'une barre conductrice (12) faisant partie d'une ligne électrique, du type comportant un corps (14) traversé de part en part par un conduit (20) de réception de ladite barre (12) et une couvercle (16) rapporté sur ledit corps (14), ledit couvercle (16) comportant, pour le passage de ladite barre (12), une lumière (24) qui prolonge le conduit (20) du corps (14), **caractérisé en ce que** le convercle (16) est rapporté autour d'une partie extérieure du corps (14) et **en ce que** la lumière (24) du couvercle (16) est bordée extérieurement par une lèvre périphérique (26) isolante et déformable élastiquement, adaptée pour s'appliquer de manière étanche sur tout le contour de la barre conductrice(12).

2. Dispositif selon la revendication 1, **caractérisé en ce que** la lèvre (26) est venue de matière avec au moins une partie du couvercle (16).

3. Dispositif selon la revendication 1 ou 2, **caractérisé en ce que** le couvercle (16) comporte une structure rigide interné et la lèvre (26) est surmoulée sur ladite structure rigide.

4. Dispositif selon la revendication 2 ou 3, **caractérisé en ce que** la lèvre (26) est venue de matière avec un revêtement isolant recouvrant au moins l'essentiel de la surface externe du couvercle (16).

5. Dispositif selon l'une quelconque des revendications précédentes, **caractérisé en ce que** ledit passage (20) et la lumière (24) ont des sections sensiblement identiques de forme oblongue.

6. Dispositif selon l'une quelconque des revendications précédentes, **caractérisé en ce que** le corps (14) comporte, dans une région (34) recouverte par le couvercle (16), un perçage transversal (40) débouchant dans ledit passage (20), lequel perçage (40) est adapté pour la réception d'une goupille de retenue de la barre conductrice (12) qui comporte elle-même un perçage (42) pour l'extrémité de la goupille, le couvercle (16) rapporté sur le corps (14) emprisonnant la goupille.

7. Dispositif selon l'une quelconque des revendications précédentes, **caractérisé en ce que** le corps (14) comporte une collerette périphérique (28) d'appui sur une face de la paroi (P), **en ce que** le couvercle (16) comporte des moyens (54) de fixation sur la paroi (P) et présente une forme de coiffe recouvrant à la fois l'essentiel du corps (14) et la collerette périphérique (28), et **en ce qu'**un joint annulaire (68) est disposé autour de la collerette périphérique (28), contre la paroi (P), dans un logement (66) du couvercle (16).

8. Dispositif selon l'une quelconque des revendications précédentes, **caractérisé en ce que** le couvercle (16) comporte un logement (22) de réception de l'essentiel du corps (14), ce logement (22) étant prolongé par la lumière (24), et **en ce que** le logement (22) comporte, sur au moins une partie de sa longueur, un tronçon (63) de section progressivement décroissante vers la lumière (24) adapté pour le guidage et la compression dans le logement (22) d'un joint annulaire (72) interposé entre le corps (14) et le couvercle (16) lors du montage du couvercle (16) sur le corps(14).

9. Traversée de paroi, **caractérisée en ce qu'**elle comporte une barre conductrice (12) et un dispositif passe-barre(10) selon l'une quelconque des revendications précédentes.

## Patentansprüche

1. Kunststoff-Durchgangsschienenvorrichtung (10), die dazu bestimmt ist, durch eine in einer Wand (P) ausgesparte Öffnung (O) hindurch angebracht zu werden, um eine Leiterschiene (12), die einen Teil einer elektrischen Leitung bildet, hindurchzuführen, wobei die Vorrichtung von dem Typ ist, der einen Körper (14), durch den von einer Seite zur anderen ein Aufnahmerohr (20) für die Schiene (12) verläuft, und einen mit dem Körper (14) verbundenen Deckel (16) umfasst, wobei der Deckel (16) für den Durchgang der Schiene (12) ein Langloch (24), das das Rohr (20) des Körpers (14) verlängert, aufweist, **dadurch gekennzeichnet, dass** der Deckel (16) um einen äußeren Teil des Körpers (14) angefügt ist und dass das Langloch (24) des Deckels (16) außen von einer isolierenden Umfangslippe (26) umgeben ist, die elastisch verformbar und dafür ausgelegt ist, dicht gegen den gesamten Umriss der Leiterschiene (12) zu drücken.

2. Vorrichtung nach Anspruch 1, **dadurch gekennzeichnet, dass** die Lippe (26) wenigstens mit einem Teil des Deckels (16) einteilig ausgebildet ist.

3. Vorrichtung nach Anspruch 1 oder 2, **dadurch gekennzeichnet, dass** der Deckel (16) eine starre innere Struktur aufweist und die Lippe (26) an die starre Struktur angegossen ist.

4. Vorrichtung nach Anspruch 2 oder 3, **dadurch gekennzeichnet, dass** die Lippe (26) mit einer isolierenden Beschichtung einteilig ausgebildet ist, die wenigstens den wesentlichen Teil der äußeren Oberfläche des Deckels (16) bedeckt.

5. Vorrichtung nach einem der vorhergehenden Ansprüche, **dadurch gekennzeichnet, dass** der Durchgang (20) und das Langloch (24) im Wesentlichen gleiche Querschnitte mit länglicher Form haben.

6. Vorrichtung nach einem der vorhergehenden Ansprüche, **dadurch gekennzeichnet, dass** der Körper (14) in einem von dem Deckel (16) abgedeckten Bereich (34) eine transversale Durchgangsbohrung (40) besitzt, die in den Durchgang (20) mündet und so beschaffen ist, dass sie einen Haltestift für die Leiterschiene (12) aufnimmt, die ihrerseits eine Durchgangsbohrung (42) für das Ende des Stifts besitzt, wobei der mit dem Körper (14) verbundene Deckel (16) den Stift umschließt.

7. Vorrichtung nach einem der vorhergehenden Ansprüche, **dadurch gekennzeichnet, dass** der Körper (14) einen Umfangskranz (28) aufweist, der der Abstützung auf einer Fläche der Wand (P) dient, dass der Deckel (16) Mittel (54) für die Befestigung an der Wand (P) aufweist und eine Kappenform besitzt, die zugleich den wesentlichen Teil des Körpers (14) und den Umfangskranz (28) abdeckt, und dass in einem Aufnahmesitz (66) des Deckels (16) eine Ringdichtung (68) um den Umfangskranz (28) gegen die Wand (P) angeordnet ist.

8. Vorrichtung nach einem der vorhergehenden Ansprüche, **dadurch gekennzeichnet, dass** der Deckel (16) einen Aufnahmesitz (22) für die Aufnahme des wesentlichen Teils des Körpers (14) aufweist, wobei dieser Aufnahmesitz (22) durch das Langloch (24) verlängert ist, und dass der Aufnahmesitz (22) wenigstens auf einem Teil seiner Länge ein Teilstück (63) mit einem in Richtung zum Langloch (24) allmählich abnehmenden Querschnitt besitzt, das für die Führung und die Kompression einer ringförmigen Dichtung (72) im Aufnahmesitz (22) geeignet ist, wobei die Ringdichtung zwischen den Körper (14) und den Deckel (16) eingefügt wird, wenn der Deckel (16) am Körper (14) angebracht wird.

9. Wanddurchgangsvorrichtung, **dadurch gekennzeichnet, dass** sie eine Leiterschiene (12) und eine Durchgangsschienenvorrichtung (10) nach einem der vorhergehenden Ansprüche umfasst.

## Claims

1. Bus-bar device (10) made of plastics, adapted to be mounted through an opening (O) provided in a wall (P) for the passage of a conducting bar (12) forming part of an electric power line, of the type comprising a body (14) through which an accommodating duct (20) for said bar (12) runs from one side to the other and a cover (16) fitted to said body (14), said cover (16) comprising, for the passage of said bar (12), an aperture (24) which extends the duct (20) of the body (14), **characterised in that** the cover (16) is fitted around an outer part of the body (14) and **in that** the aperture (24) in the cover (16) is bordered on the outside by an elastically deformable insulating peripheral lip (26) adapted to be applied in sealing manner over the entire contour of the conducting bar (12).

2. Device according to claim 1, **characterised in that** the lip (26) is integrally formed with at least part of the cover (16).

3. Device according to claim 1 or 2, **characterised in that** the cover (16) has a rigid internal structure and the lip (26) is overmoulded onto said rigid structure.

4. Device according to claim 2 or 3, **characterised in that** the lip (26) is integrally formed with an insulating coating at least substantially covering the outer surface of the cover (16).

5. Device according to any one of the preceding claims, **characterised in that** said passage (20) and the aperture (24) have substantially identical sections which are oblong in shape.

6. Device according to any one of the preceding claims, **characterised in that** the body (14) comprises, in a region (34) covered by the cover (16), a transverse bore (40) opening into said passage (20), said bore (40) being adapted to receive a pin for retaining the conducting bar (12) which itself has a bore (42) for the end of the pin, the cover (16) fitted to the body (14) trapping the pin.

7. Device according to any one of the preceding claims, **characterised in that** the body (14) comprises a peripheral collar (28) for bearing against one side of the wall (P), **in that** the cover (16) comprises means (54) for attaching to the wall (P) and is shaped as a cowling which substantially covers both the body (14) and the peripheral collar (28), and **in that** an annular joint (68) is provided around the peripheral collar (28), against the wall (P), in a recess (66) in the cover (16).

8. Device according to any one of the preceding claims, **characterised in that** the cover (16) comprises a recess (22) for substantially accommodating the body (14), this recess (22) being extended by the aperture (24), and **in that** the recess (22) comprises, over at least part of its length, a section (63) of progressively decreasing cross-section towards the aperture (24), which is adapted to guide an annular joint (72) interposed between the body (14) and the cover (16) and compress it into the recess (22) when the cover (16) is mounted on the body (14).

9. Wall feed-through, **characterised in that** it comprises a conducting bar (12) and a bus-bar device (10) according to any one of the preceding claims.
